# EUROPEAN PATENT APPLICATION

(11) **EP 4 665 060 A1**
(43) Date of publication of application: **17.12.2025**
(21) Application number: 24759579.6
(22) Date of filing: 06.02.2024
(51) Int. Cl.: H04W 72/512

(54) **COMMUNICATION METHOD AND COMMUNICATION APPARATUS**

(30) Priority: 20.02.2023 CN 202310183981
(71) Applicant: Huawei Technologies Co., Ltd., Shenzhen, Guangdong 518129 (CN)
(72) Inventor: LU, Yujiao, Shenzhen, Guangdong 518129 (CN); FAN, Qiang, Shenzhen, Guangdong 518129 (CN)
(74) Representative: Gill Jennings & Every LLP
(86) International application number: PCT/CN2024/076419
(87) International publication number: WO 2024/174902

(57) **Abstract**

This application provides a communication method, a communication apparatus, a computer-readable storage medium, and a computer program product in the communication field. In some technical solutions provided in this application, a maximum remaining transmission delay of data is determined for the data based on remaining duration of a timer maintained for the data, that is, remaining time of the data is determined, and the remaining time is reported to an access network device, so that the access network device can schedule the data based on the remaining time, to help successful transmission of the data within a budgeted transmission delay, and improve a transmission success rate of the data.

## Description

This application claims priority to Chinese Patent Application No. 202310183981.7, filed with the China National Intellectual Property Administration on February 20, 2023 and entitled "COMMUNICATION METHOD AND COMMUNICATION APPARATUS", which is incorporated herein by reference in its entirety.

### TECHNICAL FIELD

Embodiments of this application relate to the communication field, and in particular, to a communication apparatus and a communication apparatus.

### BACKGROUND

An extended reality (extended reality, XR) service usually has a high delay requirement. For example, time required by a typical packet delay budget (packet delay budget, PDB) of an uplink augmented reality (augmented reality, AR) service is 30 milliseconds (ms). In other words, an upper limit of a transmission delay from time at which a data packet arrives at an access stratum of a user equipment (user equipment, UE) to time at which the data packet arrives at an N6 interface of a user plane function (user plane function, UPF) network element is 30 ms. If a data packet is not successfully transmitted within the time required by the PDB, it is considered that the data packet has expired and is invalid. For another example, if a transmission delay from time at which a 1^{st} data packet in a protocol data unit (protocol data unit, PDU) set (set) of the XR service arrives at an access stratum of a UE to time at which a last data packet arrives at an N6 interface of a UPF network element exceeds time required by a PDU set delay budget (PDU set delay budget, PSDB), it is considered that the PDU set has expired and is invalid. Therefore, a network needs to complete data scheduling and transmission within a delay budget as much as possible, to avoid affecting service experience due to data timeout.

Currently, to enable the network to complete data scheduling and transmission within the delay budget as much as possible, the following technical solution is proposed in a communication standard: The UE reports remaining time of to-be-transmitted data to a base station, so that the base station can complete data scheduling within the delay budget based on related time information, to avoid data timeout.

However, how the UE needs to report the remaining time of the to-be-transmitted data to the base station is not further specified in the communication standard.

### SUMMARY

For the technical problem of how UE should report remaining time of to-be-transmitted data to a base station, this application proposes a new communication method, a communication apparatus, a communication system, a computer-readable storage medium, and a computer program product.

According to a first aspect, this application provides a communication method, applied to a first communication device. The method includes: determining remaining time of a first data packet based on remaining duration of a timer, where the remaining time of the first data packet is a maximum remaining transmission delay of the first data packet, the remaining time of the first data packet is less than or equal to the remaining duration of the timer; the timer is a timer of the first data packet, the timer is a timer of a data packet set including the first data packet, or the timer is a timer of a second data packet; and the second data packet is a 1^{st} data packet in the data packet set including the first data packet; and sending first information to a second communication device, where the first information indicates the remaining time, the first information indicates a remaining time interval including the remaining time, or the first information indicates whether there is a data packet whose remaining duration is less than or equal to a duration threshold.

In the communication method, a meaning of remaining time of a data packet is clearly defined, that is, a manner of determining the remaining time of the data packet is specified, and a related manner in which the first communication device indicates the remaining time of the data packet to the second communication device is specified, so that the second communication device can perform resource scheduling based on the remaining time of the data packet, thereby helping successful transmission of the data packet within a budgeted transmission delay.

The first communication device may be a UE, and the second communication device may be an access network device, for example, may be a base station.

In some possible implementation, when the first information indicates the remaining time, the remaining time is less than or equal to the duration threshold, or the remaining time is minimum remaining time.

Alternatively, the first information is sent to the second communication device when remaining time of a data packet is less than or equal to the duration threshold, or when the remaining time of the data packet is minimum remaining time. In this implementation, a waste of transmission resources can be avoided, and transmission resource utilization is improved.

In this implementation, optionally, before the first information is sent, a first protocol layer of the first communication device indicates second information to a second protocol layer of the first communication device, where the second information indicates the remaining time of the first data packet. Therefore, the first communication device may send the first information to the second communication device based on the second information in the second protocol layer.

The first protocol layer may be a PDCP layer, and the second protocol layer may be a MAC layer. For example, the PDCP layer may indicate, to the MAC, remaining time of a data packet that has not been transmitted to an RLC layer.

Alternatively, the first protocol layer is a PDCP layer, and the second protocol layer is an RLC layer. For example, the PDCP layer indicates, to the RLC layer, remaining time of a data packet that has been transmitted to the RLC layer.

Alternatively, the first protocol layer is an RLC layer, and the second protocol layer is a MAC layer. For example, after receiving remaining time from a PDCP layer, the RLC layer indicates the remaining time to the MAC layer.

In this implementation, optionally, the first information further indicates a data amount of at least one data packet, remaining time of each of the at least one data packet is a maximum remaining transmission delay of each data packet, and the remaining time of each data packet is equal to the remaining time of the first data packet. This indication manner can save transmission resources.

For example, after remaining time of each of a plurality of data packets in the first communication device is obtained, the remaining time is aggregated, data amounts of data packets with same remaining time are summarized, and the first information indicates at least one of the remaining time and a summarized data amount corresponding to each remaining time. The first information may indicate minimum remaining time and a summarized data amount corresponding to the minimum remaining time, or may indicate each remaining time less than a duration threshold and a summarized data amount corresponding to each remaining time.

Optionally, the first information further indicates the remaining time of the first data packet and a data amount of the first data packet.

For example, remaining time of each of a plurality of data packets in the first communication device is obtained, and the remaining time of each data packet and a data amount of each data packet may be indicated to the second communication device.

Optionally, when indicating remaining time to the second protocol layer, the first protocol layer may further indicate a data amount of a data packet corresponding to the remaining time.

For example, when the first protocol layer may be a PDCP layer, and the second protocol layer may be a MAC layer, the PDCP layer may indicate, to the MAC, remaining time of a data packet that has not been transmitted to an RLC layer and a data amount corresponding to the remaining time.

Alternatively, when the first protocol layer is an RLC layer, and the second protocol layer is a MAC layer, after receiving remaining time from a PDCP layer, the RLC layer indicates, to the MAC layer, the remaining time and a data amount of a data packet corresponding to the remaining time.

When the first information further indicates a data amount of at least one data packet, optionally, before the first information is sent, the first protocol layer of the first communication device indicates third information to the second protocol layer of the first communication device, where the third information indicates a data amount of the first data packet. The first protocol layer may be a PDCP layer or an RLC layer, and the second protocol layer may be a MAC layer.

For example, after learning of a data amount of a data packet, the second protocol layer associates the data amount of the data packet with a timer of the data packet, and maintains a remaining data amount of the data packet and remaining duration of the timer. When the first information needs to be reported, remaining time of the data packet is determined based on the remaining duration of the timer, and the first information is sent based on the remaining data amount and the remaining time.

In some possible implementations, when the first information indicates the remaining time interval, the remaining time interval is a minimum remaining time interval, or all remaining time in the remaining time interval is less than the duration threshold.

In other words, after remaining time of each data packet in the first communication device is obtained, the remaining time is divided into at least one time interval. A division manner or duration of each time interval may be set. The first information is sent to the second communication device only if there is a time interval in which all included remaining time is less than the duration threshold in remaining time intervals obtained through division.

In this implementation, the first information may indicate a minimum time interval in the time intervals obtained through division, or a time interval in which all included remaining time is less than a specified duration threshold. The remaining time interval in which the remaining time of the first data packet is located may be a minimum remaining time interval or a time interval less than the specified duration threshold.

In this implementation, a waste of transmission resources can be avoided, and transmission resource utilization is improved.

In this implementation, optionally, before the first information is sent, the first protocol layer of the first communication device indicates second information to the second protocol layer of the first communication device, where the second information indicates a remaining time interval of a data packet. Therefore, the first communication device may send the first information to the second communication device based on the second information in the second protocol layer.

The first protocol layer may be a PDCP layer, and the second protocol layer may be a MAC layer. For example, the PDCP layer may indicate, to the MAC, a remaining time interval of a data packet that has not been transmitted to an RLC layer.

Alternatively, the first protocol layer is a PDCP layer, and the second protocol layer is an RLC layer. For example, the PDCP layer indicates, to the RLC layer, a remaining time interval of a data packet that has been transmitted to the RLC layer.

Alternatively, the first protocol layer is an RLC layer, and the second protocol layer is a MAC layer. For example, a PDCP layer indicates, to the RLC layer, remaining time or a remaining time interval of a data packet that has been transmitted to the RLC layer. After receiving the remaining time or the remaining time interval, the RLC layer indicates the remaining time interval to the MAC layer.

In this implementation, optionally, the first information further indicates a data amount of at least one data packet, remaining time of each of the at least one data packet is a maximum remaining transmission delay of each data packet, and the remaining time interval includes the remaining time of each data packet.

For example, after remaining time of each data packet in the first communication device is obtained, and the remaining time is divided into at least one time interval, data amounts of all data packets whose remaining time is within a same remaining time interval may be counted, and data amounts obtained through counting in each remaining time interval are associated with each remaining time interval. When the first information indicates a specific remaining time interval, the first information also indicates a data amount associated with the remaining time interval.

Optionally, when indicating a remaining time interval to the second protocol layer, the first protocol layer may further indicate a data amount corresponding to the remaining time interval.

For example, when the first protocol layer may be a PDCP layer, and the second protocol layer may be a MAC layer, the PDCP layer may indicate, to the MAC, a remaining time interval of a data packet that has not been transmitted to an RLC layer and a data amount corresponding to the remaining time interval.

Alternatively, when the first protocol layer is an RLC layer, and the second protocol layer is a MAC layer, after receiving remaining time from a PDCP layer, the RLC layer indicates, to the MAC layer based on the remaining time, a remaining time interval and a data amount corresponding to the remaining time interval.

When the first information further indicates a data amount corresponding to a remaining time interval, optionally, before the first information is sent, the first protocol layer of the first communication device indicates third information to the second protocol layer of the first communication device, where the third information indicates a data amount of the first data packet. The first protocol layer may be a PDCP layer or an RLC layer, and the second protocol layer may be a MAC layer.

For example, after learning of a data amount of a data packet, the second protocol layer associates the data amount of the data packet with a timer of the data packet, and maintains a remaining data amount of the data packet and remaining duration of the timer. When the first information needs to be reported, remaining time of the data packet is determined based on the remaining duration of the timer, and a remaining time interval and a data amount corresponding to each remaining time interval are determined based on the remaining time.

In some possible implementations, when the first information indicates that there is a data packet whose remaining time is less than or equal to the duration threshold in the first communication device, the remaining time of the first data packet is less than or equal to the duration threshold.

Alternatively, after remaining time of each of a plurality of data packets is obtained, it may be determined whether remaining time corresponding to the plurality of data packets includes remaining time less than the duration threshold, and the first information is sent to the second communication device when the remaining time includes the remaining time less than the duration threshold.

In this implementation, a waste of transmission resources can be avoided, and transmission resource utilization is improved.

In any one of the foregoing implementations, optionally, the second information and/or the third information sent by the first protocol layer to the second protocol layer may be sent under a request of the second protocol layer. For example, the second protocol layer requests the second information and/or the third information from the first protocol layer.

In any one of the foregoing implementations, optionally, the timer may be a timer at the MAC layer. For example, the timer may be a timer newly defined at the MAC layer.

Alternatively, optionally, the timer may be a timer at the PDCP layer. For example, the timer may be a "discard timer" at the PDCP layer, or may be a timer newly defined at the PDCP layer.

According to a second aspect, this application provides a communication apparatus. The communication apparatus may include modules configured to implement the method according to any one of the first aspect or the implementations of the first aspect. Each module may be implemented by software and/or hardware.

For example, the communication apparatus includes a processing module and a sending module. The processing module may include a first protocol layer and a second protocol layer.

The processing module is configured to determine remaining time of a first data packet based on remaining duration of a timer, where the remaining time of the first data packet is a maximum remaining transmission delay of the first data packet, the remaining time of the first data packet is less than or equal to the remaining duration of the timer; the timer is a timer of the first data packet, the timer is a timer of a data packet set including the first data packet, or the timer is a timer of a second data packet; and the second data packet is a 1^{st} data packet in the data packet set including the first data packet.

The sending module is configured to send first information to a second communication device, where the first information indicates the remaining time, the first information indicates a remaining time interval including the remaining time, or the first information indicates whether there is a data packet whose remaining duration is less than or equal to a duration threshold.

Optionally, the first protocol layer indicates second information to the second protocol layer, and the second information indicates the remaining time of the first data packet and/or a data amount of a data packet whose remaining time is equal to the remaining time of the first data packet, or the second information indicates the remaining time interval and/or a data amount of a data packet whose remaining time is within the remaining time interval.

According to a third aspect, this application provides a communication apparatus. The apparatus may include a processor. Further, the communication apparatus may include a memory. The memory is configured to store computer-executable program code, where the program code includes instructions; and when the processor executes the instructions, the instructions enable the apparatus to perform the method in the first aspect.

In this implementation, the apparatus may be a communication device, or may be a chip used in the communication device. For example, the communication device may be a UE.

According to a fourth aspect, this application provides a computer program product including instructions. When the computer program product runs on a computer, the computer is enabled to perform the method in the first aspect.

According to a fifth aspect, this application provides a computer-readable storage medium. The computer-readable storage medium stores instructions, and when the instructions are run on an electronic device or a computer, the electronic device or the computer is enabled to perform the method in the first aspect.

According to a sixth aspect, this application provides a communication system. The communication system includes the communication apparatus in the second aspect or the third aspect.

For beneficial effects of the second aspect to the fifth aspect, refer to the beneficial effects brought by the first aspect. Details are not described herein again.

### BRIEF DESCRIPTION OF DRAWINGS

FIG. 1 is a diagram of a structure of a communication system according to an embodiment of this application;
FIG. 2 is a diagram of a structure of a protocol layer according to an embodiment of this application;
FIG. 3 is a schematic flowchart of a communication method according to an embodiment of this application;
FIG. 4 is a schematic flowchart of a communication method according to another embodiment of this application;
FIG. 5 is a schematic flowchart of a communication method according to another embodiment of this application;
FIG. 6 is a schematic flowchart of a communication method according to another embodiment of this application;
FIG. 7 is a schematic flowchart of a communication method according to another embodiment of this application;
FIG. 8 is a schematic flowchart of a communication method according to another embodiment of this application;
FIG. 9 is a schematic flowchart of a communication method according to another embodiment of this application;
FIG. 10 is a schematic flowchart of a communication method according to another embodiment of this application;
FIG. 11 is a schematic flowchart of a communication method according to another embodiment of this application;
FIG. 12 is a schematic flowchart of a communication method according to another embodiment of this application;
FIG. 13 is a schematic flowchart of a communication method according to another embodiment of this application;
FIG. 14 is a schematic flowchart of a communication method according to another embodiment of this application;
FIG. 15 is a diagram of a structure of a communication apparatus according to an embodiment of this application; and
FIG. 16 is a diagram of a structure of a communication apparatus according to another embodiment of this application.

### DESCRIPTION OF EMBODIMENTS

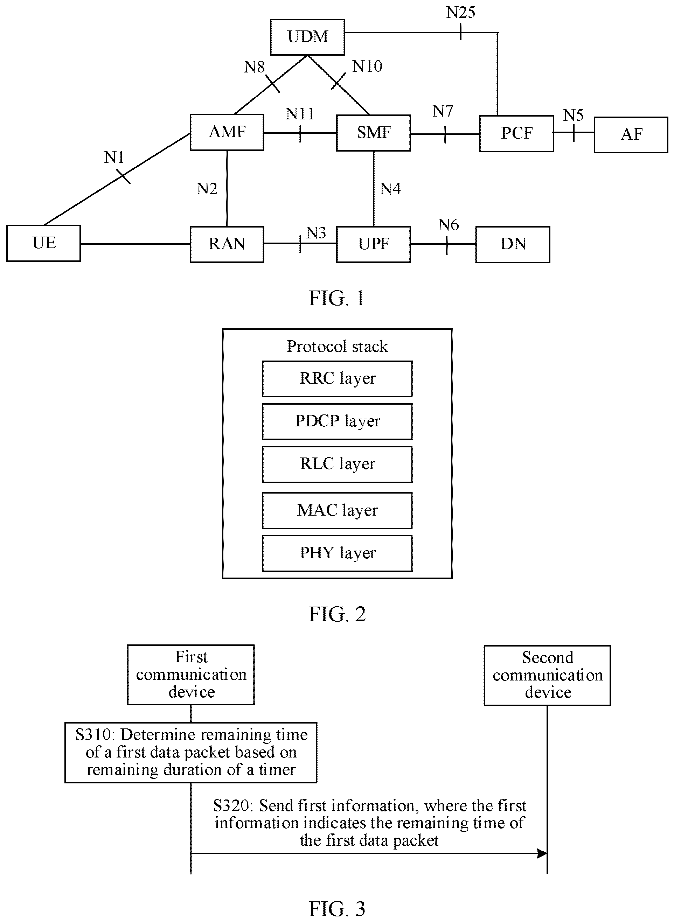

FIG. 1 is a diagram of a structure of a communication system 100 according to an embodiment of this application. As shown in FIG. 2, the communication system architecture includes a UE, an access network, a core network, and a DN.

The UE in this embodiment may be a UE unit, a UE station, a mobile station, a remote station, a remote terminal, a mobile device, a UE terminal, a terminal, a wireless communication device, a multi-media device, a streaming media device, a vehicle-mounted device, a wearable device, a terminal in a future 5G network, a terminal in a future evolved public land mobile network (public land mobile network, PLMN), or the like.

As an example, the UE in this embodiment may be a terminal that can implement an extended reality (extended reality, XR) service. XR may include augmented reality (augmented reality, AR), mixed reality (mixed reality, MR), and virtual reality (virtual reality, VR).

A radio access network (radio access network, RAN) serves as a device that provides radio access for the UE, and includes but is not limited to a base station (evolved NodeB, eNodeB), a wireless access point (wireless fidelity access point, Wi-Fi AP), a next generation NodeB (next generation NodeB, gNB), a worldwide interoperability for microwave access base station (worldwide interoperability for microwave access base station, WiMAX BS), and the like.

A core network (Core Network, CN) device corresponds to different devices in different communication systems. For example, the core network device may correspond to a serving general packet radio service (general packet radio service, GPRS) support node (serving GPRS support node, SGSN) and/or a gateway GPRS support node (gateway GPRS Support Node, GGSN) in 3G. The core network device may correspond to a mobility management entity (mobility management entity, MME) and/or a serving gateway (serving gateway, S-GW) in 4G. The core network device may correspond to an access and mobility management function (access and mobility management function, AMF), a session management function (session management function, SMF), or a user plane function (user plane function, UPF) in 5G.

Refer to an example in FIG. 1, the core network may include any one of the following network elements: an AMF, an SMF, a UPF, a policy control function (policy control function, PCF), a unified data management (unified data management, UDM) network element, and an application function (application function, AF).

As an example, functions of the foregoing network elements are as follows:
The AMF is mainly responsible for functions such as mobility management and access authentication/authorization in a mobile network, including user registration management, reachability detection, SMF network element selection, mobility status conversion management, and the like. In addition, the AMF may be further responsible for transferring a user policy between the UE and the PCF network element.

The SMF is mainly responsible for functions such as session management (including session establishment, modification, and deletion management), execution of a control policy delivered by the PCF, UPF network element selection, and UE internet protocol (internet protocol, IP) address allocation in a mobile network.

The UPF serves as an interface to a data network and is mainly responsible for data packet routing and forwarding, support of a mobility anchor point, support of an uplink classifier to route service flows to the data network, and support of a branching point to support a multi-homed PDU session, and the like.

The PCF is responsible for providing policies, such as QoS policies or slice selection policies, for the AMF and the SMF.

The UDM is configured to store user data such as subscription information and authentication/authorization information.

The AF is responsible for providing a service for a 3GPP network, for example, affecting service routing or interacting with the PCF to perform policy control.

The DN is an operator network that provides a data transmission service for a user, for example, an internet protocol multi-media service (Internet Protocol Multi-media Service, IMS) and an XR service.

Refer to the example in FIG. 1, an interface between the UE and the AMF is N1, an interface between the AMF and the RAN is N2, an interface between the RAN and the UPF is N3, an interface between the UPF and the SMF is N4, an interface between the PCF and the AF is N5, an interface between the UPF and the DN is N6, an interface between the SMF and the PCF is N7, an interface between the AMF and the UDM is N8, an interface between the UDM and the SMF is N10, an interface between the AMF and the SMF is N11, and an interface between the UDM and the PCF is N25.

The UE may access the DN by using a protocol data unit (protocol data unit, PDU) session among the UE, the RAN, the UPF, and the DN.

FIG. 2 is a diagram of a structure of a protocol layer in a UE according to an embodiment of this application. As shown in FIG. 2, the protocol stack may include a radio resource control (radio resource control, RRC) layer, a packet data convergence protocol (packet data convergence protocol, PDCP) layer, a radio link control (radio link control, RLC) layer, a medium access control (medium access control, MAC) layer, and a physical (physical, PHY) layer.

Functions of the RRC layer include at least one of the following: a broadcast system message, a paging function, RRC, a security function, end-to-end radio bearer setup, modification, and release, mobility management, MBMS service notification, setup, modification, and release of a radio bearer of an MBMS service, a QoS management function, UE measurement reporting and measurement control, NAS message transmission, and NAS message integrity protection.

The RRC includes connection establishment, maintenance, and release, including allocation of temporary representation between the UE and an E-UTRAN, configuration of a signaling radio bearer, and the like. The security function includes key management and the like. The mobility management includes UE measurement reporting, and reporting control, inter-cell handover, UE cell selection and reselection, and RRC context transmission during handover for inter-cell and inter-RAT mobility.

The PDCP layer is responsible for performing header compression to reduce bit traffic that is necessarily transmitted over a wireless interface. At a receiving end, the PDCP layer is responsible for performing a decryption function and a decompression function. For one terminal, each radio bearer has a PDCP entity. Whether a PDCP entity is associated with a control plane or a user plane depends on providing data for which radio bearer. The PDCP layer performs integrity check on RRC and NAS messages on the control plane, but does not perform integrity check on the user plane.

The RLC layer is responsible for segmentation, connection, and retransmission processing, and sequential transmission of higher-layer data. The RLC layer provides a service for the PDCP layer in a manner of a radio bearer, and one RLC entity is configured for each radio bearer of each terminal. The main purpose is to deliver data to a peer RLC entity. Therefore, the RLC provides three modes: a transparent mode, an unacknowledged mode, and an acknowledged mode.

In the transparent mode, no change is made on upper-layer data, and in this mode, no special processing needs to be performed on the RLC layer. An RLC entity in the transparent mode receives data from an upper layer, and then transfers the data to the lower MAC layer without any modification. In this case, there is no RLC header addition, no data decomposition, and no data concatenation.

In the unacknowledged mode, detection of a data packet loss may be supported, and ordering and reassembly of data packets are provided. The unacknowledged mode can be used for any dedicated or multicast logical channel, depending on application and a type of expected QoS. Data packet reordering refers to ordering data that is not received in order.

The acknowledged mode is the most complex mode. In addition to the features supported by the unacknowledged mode, when detecting a packet loss, an RLC entity in the acknowledged mode can request a peer entity of the RLC entity to retransmit data packets.

The MAC layer is responsible for processing hybrid automatic repeat request (hybrid automatic repeat request, HARQ) retransmission and uplink and downlink scheduling. The MAC layer provides a service for the RLC layer through a logical channel. The main purpose is to provide an effective connection between the RLC layer service and the physical layer; perform mapping between the logical channel and a transport channel; select a transmission format, for example, select a size of a transport block and a modulation plan as output parameters to be provided for the physical layer; manage priorities of logical channels between one or more UEs; perform error correction through a HARQ mechanism; perform filling; multiplex and demultiplex an RLC PDU; and measure and report a service volume.

A service provided by the MAC to an upper layer mainly includes: data transmitter radio resource allocation, and a service provided by the physical layer to the MAC layer includes: data transmission, HARQ feedback signaling, scheduling request signaling, and measurement.

During uplink sending, the MAC layer on a terminal side multiplexes only a plurality of uplink data streams of the MAC layer, and determines whether to send an uplink scheduling request or send uplink data.

The PHY layer is responsible for processing encoding and decoding, modulation and demodulation, multi-antenna mapping, and another telecommunication physical layer function. The physical layer provides a service for the MAC layer through a transmission channel.

The physical layer includes the following functions: detecting an error of the transmission channel and providing an indication to a higher layer; forward error correction and decoding of the transmission channel; soft combination of hybrid automatic repeat requests; speed matching and mapping between the transmission channel and a physical channel; physical channel power weighting; physical channel modulation and demodulation; time and frequency synchronization; measuring a radio frequency feature and providing an indication to a higher layer; MIMO antenna processing; transmission classification; beamforming; and radio frequency processing.

The XR service is one of 5G multimedia applications that are mainly considered in the industry field currently in the communication system. Generally, data of the XR service is generated periodically. An AR service with a frame rate of 60 fps is used as an example. In this embodiment, the UE may generate 60 frames of video images per second, that is, generate one video frame about every 16.66 ms. One video frame may be transmitted by using a plurality of data packets.

Because there is a delay during encoding of a data frame, jitter (jitter) may occur in time at which XR data in each periodicity arrives at an air interface side, that is, data arrival time may be earlier or later than an expected periodicity moment, and generally fluctuates within several milliseconds.

However, the XR service usually has a high delay requirement. An uplink AR service is used as an example. A typical packet delay budget (packet delay budget, PDB) of the uplink AR service is 30 ms. In other words, an upper limit of a transmission delay between time at which a data packet arrives at an access stratum of the UE and time at which the data packet arrives at an N6 interface of the UPF is 30 ms. If a data packet is not successfully transmitted within time required by the PDB, it is considered that the data packet has expired and is invalid.

In addition to the PDB, a PDU set delay budget (PDU set delay budget, PSDB) may also be considered in the XR service. A meaning of the PDU set delay budget is similar to that of the PDB, and an upper limit of a transmission delay of a group of data packets (a PDU set) is defined. For uplink, the upper limit of the transmission delay is an upper limit of duration from time at which a 1^{st} data packet in the PDU set arrives at the access stratum of the UE to time at which a last data packet arrives the N6 interface of the UPF. For downlink, the case is reverse.

As an example, at a transmitting end, when receiving a service data unit (service data unit, SDU) from an upper layer, the PDCP layer starts a timer named "discardTimer" for the SDU. When the "discardTimer expires", the PDCP layer discards a corresponding PDCP SDU and PDCP PDU. If the corresponding PDCP PDU has been delivered to a lower layer, the PDCP layer indicates the lower layer to discard the PDCP PDU. For the UE, duration of the "discardTimer" is configured via a network through RRC signaling "PDCP-Config".

Therefore, the communication system should complete data scheduling and transmission within a delay budget as much as possible, to avoid affecting service experience due to data timeout. For example, the UE reports delay information (delay information) of buffered data of the UE to a base station, for example, remaining time (remaining time/remaining PDB), to assist the base station in determining remaining time for data transmission, to avoid data timeout.

However, a communication protocol standard does not clearly define the "remaining time" or the "delay information", and does not specify how the UE calculates or obtains the information. In other words, based on a current technical solution only, the UE cannot determine a behavior of the UE, and cannot determine how to report the "remaining time" or the "delay information" to the base station.

For the foregoing problems, this application provides related technical solutions to resolve the foregoing technical problems.

FIG. 3 is a schematic flowchart of a communication method according to an embodiment of this application. As shown in FIG. 3, the communication method may include S310 and S320.

S310: A first communication device determines remaining time of a first data packet based on remaining duration of a timer.

The first communication device may be a UE. The timer may be a timer maintained in the UE. The remaining duration of the timer may be understood as duration from a current moment after the timer starts timing to a moment at which the timer ends timing.

Optionally, the timer is a defined timer or a newly defined timer.

Optionally, the timer is a timer at a PDCP layer or a timer at a MAC layer.

For example, when the timer is a timer maintained for data at the PDCP layer, the timer starts timing when an access stratum of the UE receives the data, and the UE discards the data associated with the timer after the timing ends.

For example, when the timer is a timer that has been defined at the PDCP layer, the timer may be a "discardTimer" at the PDCP layer.

For another example, each time a data packet, a PDU set, or a data burst arrives at the access stratum of the UE, the MAC layer of the UE starts a timer for the data packet, the PDU set, or the data burst.

When the timer is the timer that has been defined at the PDCP layer, a PDCP discard timer is reused. When no new timer or counter is introduced, complexity of obtaining remaining time that can effectively reflect life time of a data packet in a transmission network can be reduced.

Remaining time of a data packet is determined based on remaining duration of the timer maintained by the MAC layer, so that frequent inter-layer interaction can be avoided, and implementation complexity of the UE can be reduced.

Optionally, the timer is a timer maintained for a data packet, or a timer maintained for a data packet set. An example of the data packet is a PDU, and an example of the data packet set is a PDU set.

In this embodiment, the first data packet may be any to-be-transmitted data packet in the UE, for example, may be an independent to-be-transmitted data packet, or may be a data packet in a data packet set.

In this embodiment, the remaining time of the first data packet may be understood as a maximum remaining transmission delay of the first data packet. In other words, if the first data packet does not arrive at an N6 interface of a UPF from the access stratum of the UE within the remaining time, it is considered that transmission of the first data packet has expired.

In this embodiment, optionally, the remaining time of the first data packet is equal to the remaining duration of the timer, or the remaining time of the first data packet is less than the remaining duration of the timer.

In this embodiment, when the timer is a timer of a data packet, optionally, the data packet may be the first data packet. In other words, the remaining time of the first data packet is determined based on the remaining duration of the timer of the first data packet.

For example, the PDCP layer maintains or defines a "discardTimer" for each data packet. Remaining duration of a "discardTimer" maintained or defined for the first data packet may be used as the remaining time of the first data packet. When the "discardTimer" expires, the UE discards the first data packet.

In this embodiment, when the timer is a timer of a data packet, optionally, the data packet and the first data packet may be data packets in a same data packet set.

For example, the data packet may be a 1^{st} data packet in the data packet set. In other words, the remaining time of the first data packet may be determined based on remaining duration of a timer associated with the 1^{st} data packet in the data packet set in which the first data packet is located.

For example, the PDCP layer maintains or defines a "discardTimer" for each data packet. Remaining duration of a "discardTimer" maintained or defined for a second data packet may be used as the remaining time of the first data packet. The second data packet and the first data packet are data packets in a same PDU set, and the second data packet is a 1^{st} data packet in the PDU set. When the "discardTimer" corresponding to the 1^{st} data packet in the PDU set expires, the PDCP layer may discard all data packets in the PDU set.

In this embodiment, when the timer is a timer of a data packet set, as an example, the PDCP layer maintains or defines a "discardTimer" for each PDU set, and remaining duration of a "discardTimer" associated with a PDU set may be used as remaining time of each data packet in the PDU set. In other words, remaining duration of a "discardTimer" associated with a PDU set to which the first data packet belongs may be used as the remaining time of the first data packet. When the "discard timer associated with the PDU set expires", the PDCP layer discards all data packets in the PDU set.

In this embodiment of this application, when the timer is the timer at the MAC layer, for an implementation of determining remaining time of a data packet based on remaining duration of a specific timer, refer to the foregoing implementation of determining the remaining time of the data packet based on the remaining duration of the timer at the PDCP layer. Details are not described herein again.

The timer at the MAC layer may be recorded as a "DelayTimer". Timing duration of the timer at the MAC layer may be configured by a gNB, or may reuse a configuration of the discard timer at the PDCP layer.

S320: The first communication device sends first information to a second communication device, where the first information indicates the remaining time of the first data packet.

In this embodiment, the second communication device may be an access network device, for example, may be a radio access network device, and more specifically, may be a gNB.

Optionally, the first communication device may send the first information to the second communication device when the remaining time of the first data packet is less than or equal to a time threshold. The time threshold may be configured.

Optionally, the first communication device may send the first information to the second communication device when the remaining time of the first data packet is minimum remaining time in current remaining time.

Optionally, the first communication device may send the first information to the second communication device under another condition or without limitation of any condition.

Optionally, the MAC layer in the first communication device may fill a MAC CE with the remaining time, and report the remaining time of the first data packet to the second communication device through the MAC CE.

Considering that there is an interval between generation time of the MAC CE and actual transmission time, the MAC layer may subtract the time interval from the remaining time determined based on the remaining duration of the timer, to obtain final remaining time of the first data packet, and fill the MAC CE with the final remaining time. In this way, accuracy of the final remaining time of the first data packet can be improved, thereby improving a transmission success rate of the first data packet.

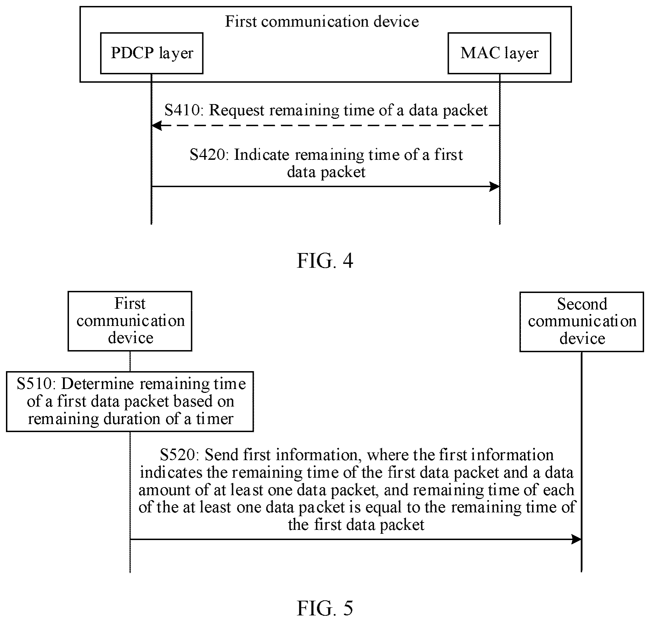

When the timer is the timer at the PDCP layer, in this embodiment, optionally, FIG. 4 is an example diagram of interaction between the PDCP layer and the MAC layer in the first communication device.

It can be learned from S420, after the PDCP layer determines the remaining duration of the first data packet based on the remaining duration of the timer, the PDCP layer may indicate the remaining time of the first data packet to the MAC layer.

Optionally, before S420, as shown in S410, the MAC layer may send a request for remaining time of a data packet to the PDCP layer.

FIG. 5 is a schematic flowchart of a communication method according to another embodiment of this application. As shown in FIG. 5, the communication method may include S510 and S520.

S510: A first communication device determines remaining time of a first data packet based on remaining duration of a timer.

For this step, refer to S310. Details are not described herein again.

For ease of description, in this embodiment, the remaining time of the first data packet is referred to as first remaining time.

S520: The first communication device sends first information to a second communication device, where the first information indicates the remaining time of the first data packet and a data amount of at least one data packet, and remaining time of each of the at least one data packet is equal to the remaining time of the first data packet.

In this embodiment, that the remaining time of each of the at least one data packet is equal to the remaining time of the first data packet may be understood as that the at least one data packet includes all data packets whose remaining time is equal to the first remaining time. In other words, the first information indicates the first remaining time and data amounts of all the data packets whose remaining time is equal to the first remaining time.

As an example, after determining remaining time of each data packet in the manner shown in S310, the first communication device may aggregate the remaining time, that is, count a data amount of a data packet with same remaining time, and associate the data amount with the remaining time. The first information may carry the remaining time and the data amount, and an association relationship between the remaining time and the data amount.

In this embodiment, for a manner in which the first communication device sends the first information to the second communication device, refer to S320. Details are not described herein again.

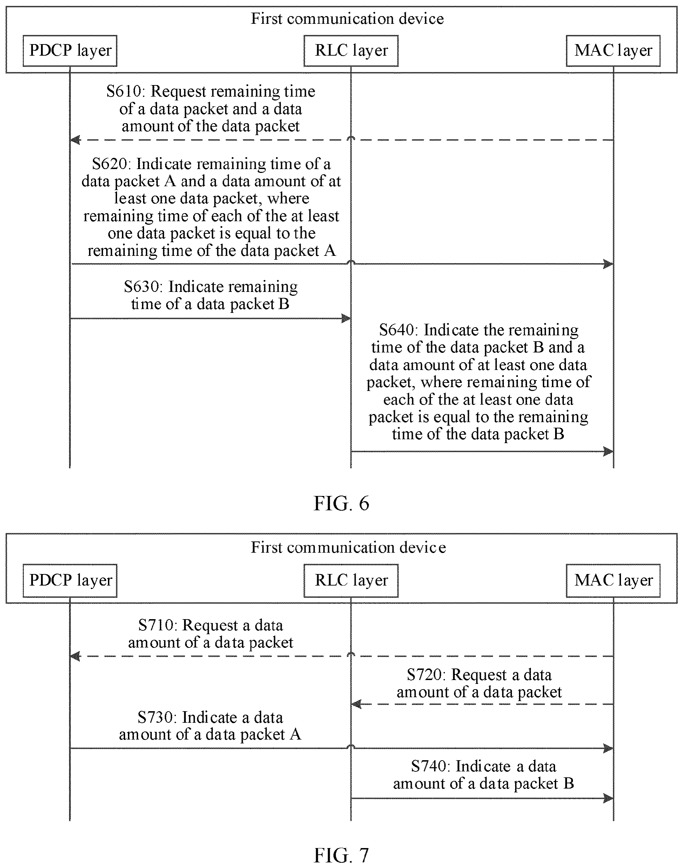

In the embodiment shown in FIG. 5, when the timer is a timer at a PDCP layer, FIG. 6 is a schematic flowchart of exchanging remaining time and a data amount of a data packet between the PDCP layer and the MAC layer.

As shown in S620 in FIG. 6, the PDCP layer indicates remaining time of a data packet A and a data amount of at least one data packet to the MAC layer, where remaining time of each of the at least one data packet is equal to the remaining time of the data packet A. The data packet A may include a data packet that is in the PDCP layer and that has not been delivered to an RLC layer.

As an example, the data packet A may be a PDCP SDU that has not been constructed into a PDCP data PDU, a PDCP data PDU that has not been delivered to the RLC layer, or a PDCP SDU or a PDCP data PDU that waits for retransmission (only in an AM mode).

It may be understood that the PDCP layer may indicate a plurality of pieces of remaining time and a plurality of data amounts to the MAC layer. The plurality of data amounts one to one correspond to the plurality of pieces of remaining time. Each data amount is data amounts of all data packets whose remaining time is equal to remaining time corresponding to the data amount. The remaining time of the data packet A is one of the plurality of pieces of remaining time.

As shown in S630, the PDCP layer indicates remaining time of a data packet B to the RLC layer, where the data packet B may include a data packet that is in the PDCP layer and that has been delivered to the RLC layer.

As an example, the data packet B may be an RLC SDU and an RLC SDU segment that have not been assembled into an RLC data PDU, an RLC data PDU that waits for initial transmission, or an RLC data PDU that waits for retransmission (only in an AM mode).

It may be understood that the PDCP layer may indicate a plurality of pieces of remaining time to the RLC layer. The plurality of pieces of remaining time include the remaining time of the data packet B.

As shown in S640, the RLC layer indicates the remaining time of the data packet B and a data amount of at least one data packet to the MAC layer, where remaining time of each of the at least one data packet is equal to the remaining time of the data packet B.

It may be understood that the RLC layer may indicate a plurality of pieces of remaining time and a plurality of data amounts to the MAC layer. The plurality of data amounts one to one correspond to the plurality of pieces of remaining time. Each data amount is data amounts of all data packets whose remaining time is equal to remaining time corresponding to the data amount. The remaining time of the data packet B is one of the plurality of pieces of remaining time.

In some implementations, when a PDCP entity is associated with a plurality of RLC entities or a plurality of MAC entities, when indicating remaining time to the RLC layer or the MAC layer, the PDCP entity needs to indicate the remaining time to a corresponding RLC entity and MAC entity based on a data delivery path.

For example, assuming that a PDCP #1 is associated with an RLC #1 and an RLC #2, the RLC #1 and the RLC #2 are respectively associated with a MAC #1 and a MAC #2, a data packet #1 is delivered to the RLC #1, a data packet #2 is delivered to the RLC #2, and a data packet #3 has not been delivered to the RLC layer, the PDCP #1 indicates remaining time of the data packet #1 to the RLC #1, and the RLC #1 further indicates the remaining time of the data packet #1 to the MAC #1; and a PDCP #2 indicates remaining time of the data packet #2 to the RLC #2, and the RLC #2 further indicates the remaining time of the data packet #2 to the MAC #2.

For the data packet #3, if the data packet #3 may be delivered to not only the RLC #1 but also the RLC #2 (for example, when PDCP splitting takes effect), or if the data packet #3 is delivered to both the RLC #1 and the RLC #2 (for example, when PDCP duplication takes effect), the PDCP #1 indicates the remaining time of the data packet 1 to the MAC #1 and the MAC #2 respectively. If the data packet #3 is delivered only to the RLC #1 (for example, when splitting or duplication does not take effect), the PDCP #1 indicates the remaining time of the data packet #3 to the MAC #1.

Optionally, in this embodiment, a sequence of S620, S630, and S640 is not limited. For example, S620 may be located between S630 and S640, or may be located after S640.

Optionally, in this embodiment, S610 may be further included, that is, the MAC layer requests remaining time and a data amount of a data packet from the PDCP layer.

In some embodiments of this application, optionally, the PDCP layer and the RLC layer may indicate remaining time of each data packet and a data amount of each data packet to the MAC layer, and the MAC layer aggregates the remaining time and the data amount.

In the embodiment shown in FIG. 5, when the timer is the timer at the MAC layer, FIG. 7 is a schematic flowchart of exchanging a data amount of a data packet between the PDCP layer and the MAC layer.

In S730, the PDCP layer indicates a data amount of a data packet A to the MAC layer. For a meaning of the data packet A, refer to the meaning of the data packet A in the foregoing embodiment. Details are not described herein again.

It may be understood that the PDCP layer may indicate a data amount of each of a plurality of data packets to the MAC layer.

For example, when each data packet, PDU set, or data burst arrives at an access stratum, the PDCP layer indicates a data amount of each data packet, PDU set, or data burst to the MAC layer.

Optionally, this embodiment may further include S710, S730, and S740.

In S710, the MAC layer requests a data amount of a data packet from the PDCP layer. When learning of the request, the PDCP layer indicates the data amount of the data packet A to the MAC layer.

In S730, the MAC layer requests a data amount of a data packet from the RLC layer.

When learning of the request, the RLC layer indicates a data amount of a data packet B to the MAC layer in S740. For a meaning of the data packet B, refer to the meaning of the data packet B in the foregoing embodiment. Details are not described herein again.

It may be understood that the RLC layer may indicate a data amount of each of a plurality of data packets to the MAC layer.

In this embodiment, the first data packet in the embodiment shown in FIG. 5 may be the data packet A, or may be the data packet B.

After learning of the data amounts of the data packets from the PDCP layer and the RCL layer, the MAC layer may associate the data amount of each data packet with a corresponding timer at the MAC layer, and the MAC layer maintains the data amount. For example, after a data packet is correctly transmitted, the MAC layer subtracts a correctly transmitted data amount from a corresponding data amount, to obtain a data amount associated with current remaining time of a timer.

When the MAC layer needs to report first information, the MAC layer may aggregate the remaining time and the data amount. For example, the MAC layer counts a data amount associated with same remaining time, to obtain the remaining time and the data amount associated with the remaining time, that is, obtain the first information.

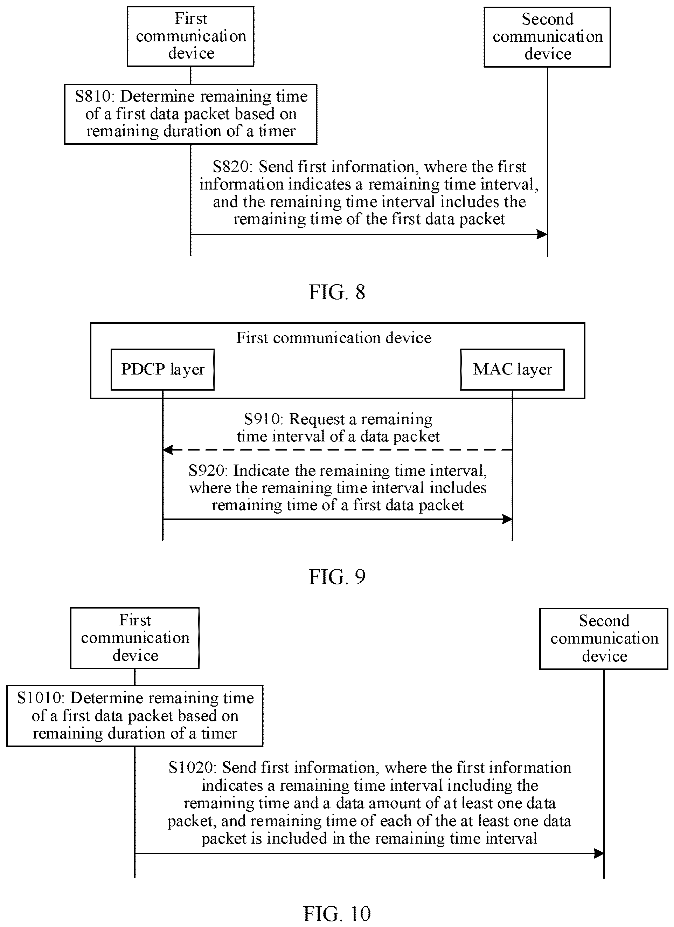

FIG. 8 is a schematic flowchart of a communication method according to another embodiment of this application. As shown in FIG. 8, the communication method may include S810 and S820.

S810: A first communication device determines remaining time of a first data packet based on remaining duration of a timer.

For this step, refer to S310. Details are not described herein again.

S820: The first communication device sends first information to a second communication device, where the first information indicates a remaining time interval, and the remaining time interval includes the remaining time of the first data packet.

In this embodiment, that the remaining time interval includes the remaining time of the first data packet may be understood as that an upper boundary of the remaining time interval is greater than or equal to the remaining time of the first data packet and a lower boundary of the remaining time interval is less than or equal to the remaining time of the first data packet. For ease of description, in this embodiment, the remaining time interval is referred to as a first remaining time interval.

For example, a UE performs interval division based on remaining time of buffered data of each logical channel (logical channel, LCH) or logical channel group (logical channel group, LCG), and reports a data amount within each remaining time interval, for example, report information indicating that remaining time of data of 500 bytes (Bytes) in an LCH 1 is within 0 ms to 10 ms, and remaining time of data of 1000 bytes is within 10 ms to 20 ms.

In this embodiment, the second communication device may be an access network device, for example, may be a radio access network device, and more specifically, may be a gNB.

Optionally, the first communication device may send the first information to the second communication device when remaining time in the first remaining time interval is less than or equal to a time threshold. The time threshold may be configured.

Optionally, the first communication device may send the first information to the second communication device when the first remaining time interval is a minimum remaining time interval.

Optionally, the first communication device may send the first information to the second communication device under another condition or without limitation of any condition.

Optionally, the MAC layer in the first communication device may fill a MAC CE with the first remaining time interval or an index of the first remaining time interval, and report the first remaining time interval to the second communication device through the MAC CE.

In the embodiment shown in FIG. 8, when the timer is the timer at the PDCP layer, FIG. 9 is an example diagram of interaction between the PDCP layer and the MAC layer in the first communication device.

In S920, the PDCP layer indicates a remaining time interval to the MAC layer, where the remaining time interval includes remaining time of a first data packet. This implementation can avoid exchanging excessive information between the PDCP layer and the MAC layer.

For example, the PDCP layer divides remaining time of a data packet into a plurality of intervals, and indicates the plurality of remaining time intervals to the MAC layer. Optionally, a manner of indicating the remaining time interval may be indicating a boundary value of the remaining time interval or an index of the remaining time interval.

Optionally, before S920, this embodiment may further include S910, that is, the MAC layer requests the remaining time interval from the PDCP layer.

In some implementations, the PDCP layer may send remaining time of each data packet to the MAC layer, and the MAC layer aggregates the remaining time, to determine a remaining time interval to which each remaining time belongs.

Optionally, when aggregating the remaining time, the MAC layer may subtract an interval between generation time of the MAC CE and actual transmission time from the remaining time, to obtain final remaining time.

FIG. 10 is a schematic flowchart of a communication method according to another embodiment of this application. As shown in FIG. 10, the communication method may include S1010 and S1020.

S1010: A first communication device determines remaining time of a first data packet based on remaining duration of a timer.

For this step, refer to S310. Details are not described herein again.

S1020: The first communication device sends first information to a second communication device, where the first information indicates a remaining time interval and a data amount of at least one data packet, the remaining time interval includes the remaining time of the first data packet, and remaining time of each of the at least one data packet is within the remaining time interval.

In this embodiment, for an implementation in which the first communication device sends the first information to the second communication device, refer to S820 in FIG. 8. Details are not described herein again.

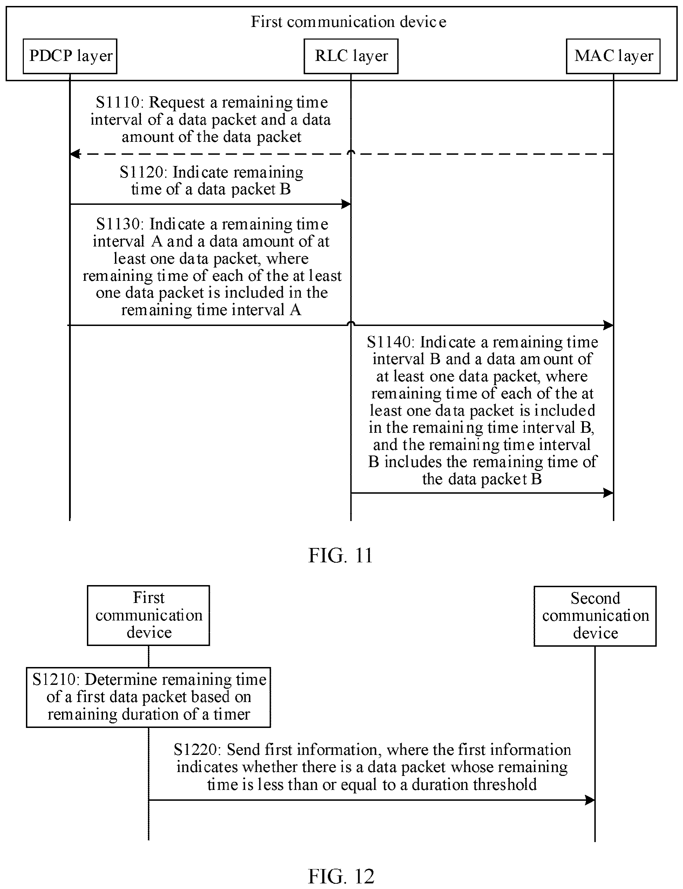

In the embodiment shown in FIG. 10, when the timer is the timer at the PDCP layer, FIG. 11 is another example diagram of interaction between the PDCP layer and the MAC layer in the first communication device.

In S1120, the PDCP layer indicates remaining time of a data packet B to an RLC layer.

In S1140, the RLC layer indicates a remaining time interval B and a data amount of at least one data packet to the MAC layer, where the remaining time interval B includes the remaining time of the data packet B, and remaining time of each of the at least one data packet is within the remaining time interval B.

In S1130, the PDCP layer indicates a remaining time interval A and a data amount of at least one data packet to the MAC layer, where remaining time of each of the at least one data packet is within the remaining time interval A, and the remaining time interval A includes remaining time of a data packet A.

In this embodiment, optionally, for meanings of the data packet A and the data packet B, refer to the meanings of the data packet A and the data packet B in the foregoing content.

In this embodiment, optionally, a sequence of S1130, S1120, and S1140 is not limited. For example, S1130 may be located before S1120, or may be located after S1140.

In this embodiment, optionally, before S1130 and S1120, S1110 may be further included, that is, the MAC layer requests a remaining time interval and a data amount from the PDCP layer.

In the embodiment shown in FIG. 10, when the timer is the timer at the MAC layer, optionally, FIG. 7 shows an interaction procedure between the PDCP layer and the MAC layer. In this case, after learning of a data amount of each data packet, the MAC layer maintains the data amount of each data packet, performs interval division based on remaining time of a timer corresponding to each data packet, and associates a remaining time interval with the data amount, to obtain the first information.

FIG. 12 is a schematic flowchart of a communication method according to another embodiment of this application. As shown in FIG. 12, the communication method may include S1210 and S1220.

S1210: A first communication device determines remaining time of a first data packet based on remaining time of a timer.

For this step, refer to S310. Details are not described herein again.

S1220: The first communication device sends first information to a second communication device, where the first information indicates whether there is a data packet whose remaining time is less than or equal to a duration threshold in the first communication device.

In this embodiment, optionally, when the remaining time of the first data packet is less than or equal to the duration threshold, the first information specifically indicates that there is a data packet whose remaining time is less than or equal to the duration threshold in the first communication device.

In this embodiment, optionally, when remaining time of all data packets is greater than the duration threshold, the first information specifically indicates that there is no data packet whose remaining time is less than or equal to the duration threshold in the first communication device.

In this embodiment, optionally, the first information further indicates a data amount of at least one data packet, and remaining time of each of the at least one data packet is less than or equal to the duration threshold.

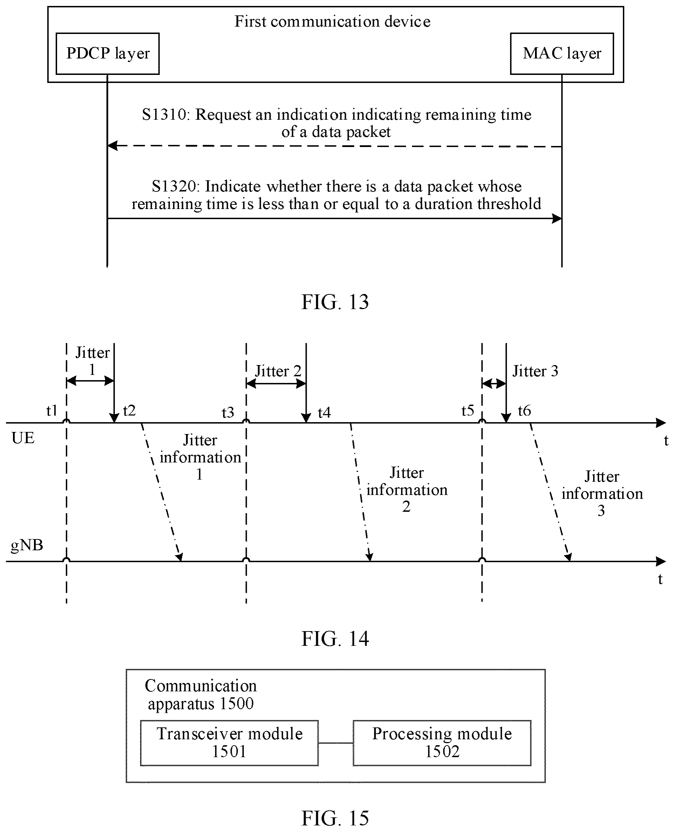

In the embodiment shown in FIG. 12, when the timer is the timer at the PDCP layer, FIG. 13 is another example diagram of interaction between the PDCP layer and the MAC layer in the first communication device.

In S1320, the PDCP layer indicates, to the MAC layer, whether there is a data packet whose remaining time is less than or equal to a duration threshold. When remaining time of a first data packet is less than or equal to the duration threshold, it indicates that there is a data packet whose remaining time is less than or equal to the duration threshold; or when remaining time of all data packets is greater than the duration threshold, it indicates that there is no data packet whose remaining time is less than or equal to the duration threshold.

In this embodiment, optionally, the PDCP layer further indicates a data amount of at least one data packet to the MAC layer, where remaining time of each of the at least one data packet is less than or equal to the duration threshold.

In this embodiment, optionally, before S1320, S1310 may be further included, that is, the MAC layer requests, from the PDCP layer, an indication indicating whether remaining time of a data packet is less than or equal to the duration threshold.

In some embodiments of this application, optionally, interaction shown in FIG. 7 may be performed between the PDCP layer and the MAC layer. After learning of a data amount of a data packet, the MAC layer may determine, based on an association relationship between remaining time and a data packet maintained by the MAC layer, a data amount of a data packet whose remaining time is less than or equal to the duration threshold.

In any one of the foregoing embodiments of this application, there may be a special type of data packet, that is, a PDCP control PDU. Such a data packet is a data packet that is generated by a PDCP entity and that is used to transmit control information, and generally does not have a corresponding timer, for example, does not have a corresponding "discardTimer". In this case, for the PDCP control PDU, the PDCP layer may separately indicate a data amount of the control PDU to a MAC entity, use the control PDU as data with minimum remaining time, or calculate the data amount of the control PDU into a data amount associated with the minimum remaining time.

In any one of the foregoing embodiments of this application, optionally, a boundary of the remaining time interval may be determined and implemented by the UE, may be agreed on in a protocol, or may be configured by the gNB.

In some embodiments of this application, the first communication device may adjust a packet assembly sequence based on remaining time of a data packet.

In some embodiments of this application, the first communication device may determine priorities of different LCHs or LCGs based on minimum remaining time of the LCHs.

In some embodiments of this application, the UE may not report remaining time, but reports jitter (jitter) information to assist the gNB in calculating the remaining time.

For example, the gNB first learns of a start moment and a periodicity of XR data through reporting of the core network or the UE, so that the gNB can theoretically deduce a moment at which data in each periodicity should arrive at the access stratum of the UE. Then, when a data burst (data burst) in each periodicity arrives at the access stratum of the UE, the UE calculates a magnitude of jitter of the data burst, that is, an interval between time at which data actually arrives at the access stratum and expected time at which the data arrives at the access stratum, and reports the interval to the gNB.

In this way, the gNB can deduce the time at which the data actually arrives at the UE, and may learn of remaining time of the data based on a delay budget (delay budget).

In FIG. 14, a solid line represents a moment at which data actually arrives at the access stratum of the UE, a pure dashed line represents an expected moment at which the data arrives at the access stratum of the UE, and a dotted line represents that the UE reports jitter information (jitter information) to the gNB. A start point of an arrow is a moment at which the UE sends the jitter information, and an end point of the arrow is a moment at which the gNB receives the jitter information.

As an example, t1 is expected time at which a data burst #1 arrives at the access stratum of the UE, t2 is time at which the data burst #1 actually arrives at the access stratum of the UE, jitter 1 (jitter 1) indicates an interval between the expected time at which the data burst #1 arrives at the access stratum of the UE and the time at which the data burst #1 actually arrives at the access stratum of the UE, and jitter information 1 indicates the jitter 1.

t3 is expected time at which a data burst #2 arrives at the access stratum of the UE, t4 is time at which the data burst #2 actually arrives at the access stratum of the UE, jitter 2 (jitter 2) indicates an interval between the expected time at which the data burst #2 arrives at the access stratum of the UE and the time at which the data burst #2 actually arrives at the access stratum of the UE, and jitter information 2 indicates the jitter 2.

t5 is expected time at which a data burst #3 arrives at the access stratum of the UE, t6 is time at which the data burst #3 actually arrives at the access stratum of the UE, jitter 3 (jitter 3) indicates an interval between the expected time at which the data burst #3 arrives at the access stratum of the UE and the time at which the data burst #3 actually arrives at the access stratum of the UE, and jitter information 3 indicates the jitter 3.

The method can resolve a problem that the remaining time information reported to the gNB in the foregoing timer method may be inaccurate. For example, if the MAC CE reporting the remaining time is retransmitted, the UE cannot modify the remaining time in the MAC CE. When the gNB correctly receives the MAC CE through a plurality of retransmissions, the remaining time information carried in the MAC CE has expired.

In some embodiments of this application, the UE may directly report, to the gNB, information about a moment at which a data burst in each periodicity actually arrives at the access stratum, and the gNB may deduce timeout time of corresponding data based on a delay budget, to avoid timeout of the corresponding data as much as possible.

For example, the UE may report, to the gNB, data arrival UTC time, or may report {a system frame number, a frame number, a subframe number} corresponding to a data arrival moment. Optionally, considering that a data periodicity and a transmission delay are usually of a magnitude of several milliseconds to dozens of milliseconds, the UE may also use fewer bits (bits) to represent the moment information, to reduce overheads. For example, when the UTC time is reported, a moment in 100 ms may be indicated only by using 7 bits, and a complete hour/minute/second/millisecond does not need to be indicated.

For example, if the gNB receives, at the UTC time 10:30:30.500, information reported by the UE, where the information indicates a 70^{th} ms in a range of 100 ms, the gNB may determine that an arrival moment of corresponding data is 10:30:30.470.

For another example, when the system frame number is reported, 40 ms may be indicated only by using least significant 2 bits of the SFN, and a complete 10-bit SFN does not need to be used. For example, if the gNB receives, at an SFN #33 (corresponding to 0000 1000 01), information reported by the UE, where the information indicates that bit information of an SFN is 00, the gNB may determine that an arrival moment of corresponding data is SNF 0000 1000 00, that is, SFN #32.

Alternatively, the UE may report expected timeout time of data to the gNB. Specifically, when the data arrives at the access stratum of the UE, the UE adds a delay budget (or configured duration of a PDCP discard timer) of the data to a current moment, to obtain a timeout moment of the data, and reports the moment information to the gNB. The reporting manner is the same as that in the previous paragraph.

The UE may report a data amount of a corresponding data burst when reporting the moment information. For a plurality of data bursts whose arrival moments are close, the UE may also aggregate corresponding data to report arrival moments or timeout moments and data amounts together. Specifically, arrival time or timeout time of a data burst that arrives earliest may be reported. An interval threshold reported based on aggregation of different data may be determined and implemented by the UE, may be agreed in a protocol, or may be configured by the base station.

In the method, the UE directly reports data arrival or timeout moment information, to assist the base station in learning of remaining schedulable time of different data, to avoid data timeout. In addition, in comparison with the method for transmitting jitter information, this method can reduce implementation complexity.

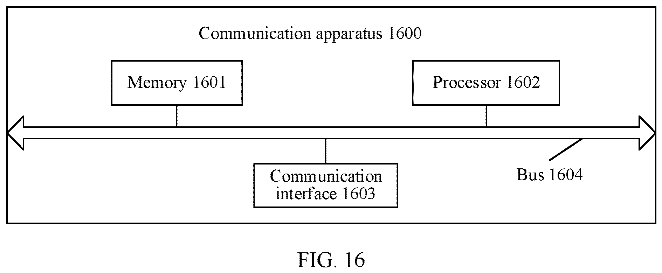

The foregoing describes the communication methods in embodiments of this application with reference to FIG. 1 to FIG. 14. The following describes communication apparatuses in embodiments of this application with reference to FIG. 15 and FIG. 16.

FIG. 15 is a diagram of a structure of a communication apparatus according to an embodiment of this application. As shown in FIG. 15, the communication apparatus 1500 includes a transceiver module 1501 and a processing module 1502.

In an example, the communication apparatus 1500 may be used in a communication device, for example, may be used in a UE. In this example, the communication apparatus 1500 may be configured to implement operations performed by the first communication device or the UE in the method shown in any one of the foregoing figures. The transceiver module 1501 may be configured to implement a receiving operation and a sending operation, and the processing module 1502 may be configured to implement operations such as obtaining, determining, and configuration.

FIG. 16 is a diagram of a structure of a communication apparatus according to another embodiment of this application. The apparatus 1600 shown in FIG. 16 may be configured to perform the method performed by the UE in the embodiment shown in any one of the foregoing figures.

As shown in FIG. 16, the apparatus 1600 in this embodiment includes a memory 1601, a processor 1602, a communication interface 1603, and a bus 1604. The memory 1601, the processor 1602, and the communication interface 1603 are communicatively connected to each other through the bus 1604.

The memory 1601 may be a read only memory (read only memory, ROM), a static storage device, a dynamic storage device, or a random access memory (random access memory, RAM). The memory 1601 may store a program. When the program stored in the memory 1601 is executed by the processor 1602, the processor 1602 is configured to perform the steps performed by the UE in any one of the foregoing embodiments.

The processor 1602 may be a general-purpose central processing unit (central processing unit, CPU), a microprocessor, an application specific integrated circuit (application specific integrated circuit, ASIC), or one or more integrated circuits, and is configured to execute a related program.

The processor 1602 may alternatively be an integrated circuit chip and has a signal processing capability. In an implementation process, the related steps in embodiments of this application may be completed by using a hardware integrated logic circuit or instructions in a form of software in the processor 1602.

The processor 1602 may alternatively be a general-purpose processor, a digital signal processor (digital signal processing, DSP), an application specific integrated circuit (ASIC), a field programmable gate array (field programmable gate array, FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like.

The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read only memory, a programmable read only memory, an electrically erasable programmable memory, or a register. The storage medium is located in the memory 1601. The processor 1602 reads information in the memory 1601, and completes, in combination with hardware of the processor 1602, functions that need to be performed by units included in the apparatus in this application.

The communication interface 1603 may use, but is not limited to, a transceiver apparatus such as a transceiver, to implement communication between the apparatus 1600 and another device or a communication network.

The bus 1604 may include a path for transmitting information between various components (for example, the memory 1601, the processor 1602, and the communication interface 1603) of the apparatus 1600.

It should be understood that, the apparatus 1600 shown in this embodiment of this application may be a terminal device, or may be a chip configured in the terminal device.

Some embodiments of this application further provide a computer program product. When the computer program product runs on a processor, the method implemented by the first communication device in any one of the foregoing embodiments may be implemented. Some embodiments of this application further provide a computer-readable storage medium. The computer-readable storage medium includes computer instructions. When the computer instructions are run on a processor, the method implemented by the first communication device in any one of the foregoing embodiments may be implemented. In some embodiments of this application, a communication system is further provided. The communication system includes the first communication device and/or the second communication device in any one of the foregoing embodiments.

It should be noted that the modules or components in the foregoing embodiments may be configured as one or more integrated circuits for implementing the foregoing methods, for example, one or more application specific integrated circuits (application specific integrated circuits, ASICs), one or more microprocessors (digital signal processors, DSPs), or one or more field programmable gate arrays (field programmable gate arrays, FPGAs). For another example, when one of the foregoing modules is implemented in a form of invoking program code by a processing element, the processing element may be a general-purpose processor, for example, a central processing unit (central processing unit, CPU) or another processor that can invoke the program code, for example, a controller. For another example, these modules may be integrated together and implemented in a form of a system-on-a-chip (system-on-a-chip, SoC).

All or some of the foregoing embodiments may be implemented by using software, hardware, firmware, software modules or any combination thereof. When software is used to implement embodiments, all or a part of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid-State Drive (SSD)), or the like.

The term "a plurality of" in this specification means two or more. The term "and/or" in this specification describes only an association relationship for describing associated objects and represents that three relationships may exist. For example, A and/or B may represent the following three cases: Only A exists, both A and B exist, and only B exists. In addition, a character "/" in this specification usually indicates an "or" relationship between associated objects, and a character "/" in a formula usually indicates a "divisible" relationship between associated objects. In addition, it should be understood that in descriptions of this application, terms such as "first" and "second" are merely used for distinguishing and description, but should not be understood as indicating or implying relative importance, or should not be understood as indicating or implying a sequence.

It may be understood that various numbers in embodiments of this application are merely used for differentiation for ease of description, and are not used to limit the scope of embodiments of this application.

It should be understood that sequence numbers of the foregoing processes do not mean execution sequences in embodiments of this application. The execution sequences of the processes should be determined according to functions and internal logic of the processes, and should not be construed as any limitation on the implementation processes of embodiments of this application.

## Claims

1. A communication method, applied to a first communication device, wherein the method comprises:
determining remaining time of a first data packet based on remaining duration of a timer, wherein the remaining time of the first data packet is equal to the remaining duration of the timer; the timer is a timer of the first data packet, the timer is a timer of a data packet set comprising the first data packet, or the timer is a timer of a second data packet; and the second data packet is a 1^{st} data packet in the data packet set comprising the first data packet; and
sending first information to a second communication device, wherein the first information indicates the remaining time, the first information indicates a remaining time interval comprising the remaining time, or the first information indicates whether there is a data packet whose remaining duration is less than a duration threshold.

2. The method according to claim 1, wherein when the first information indicates the remaining time, the remaining time is less than the duration threshold, or the remaining time is minimum remaining time;
when the first information indicates the remaining time interval, the remaining time interval is a minimum remaining time interval, or all remaining time in the remaining time interval is less than the duration threshold; or
when the first information indicates that there is a data packet whose remaining time is less than or equal to the duration threshold in the first communication device, the remaining time of the first data packet is less than or equal to the duration threshold.

3. The method according to claim 1 or 2, wherein the first information further indicates a data amount of at least one data packet, and remaining time of each of the at least one data packet is a maximum remaining transmission delay of each data packet; and
when the first information indicates the remaining time, the remaining time of each data packet is less than or equal to the remaining time of the first data packet; or
when the first information indicates the remaining time interval, the remaining time interval comprises the remaining time of each data packet.

4. The method according to claim 2, wherein when the first information indicates the remaining time, and the remaining time is the minimum remaining time, the first information further indicates a data amount of at least one data packet, and remaining time of each of the at least one data packet is less than or equal to the duration threshold.

5. The method according to claim 3 or 4, wherein the at least one data packet comprises at least one of the following: a PDCP SDU that has not been constructed into a PDCP data PDU, a PDCP data PDU that has not been delivered to an RLC layer, a PDCP SDU that waits for retransmission, a PDCP data PDU that waits for retransmission, an RLC SDU and an RLC SDU segment that have not been assembled into an RLC data PDU, an RLC data PDU that waits for initial transmission, or an RLC data PDU that waits for retransmission.

6. The method according to any one of claims 1 to 5, wherein the method further comprises:
providing, by a first protocol layer of the first communication device, at least one of the following information for a second protocol layer of the first communication device: the remaining time of the first data packet, a data amount of a data packet whose remaining time is equal to the remaining time of the first data packet, the remaining time interval, a data amount of a data packet whose remaining time is within the remaining time interval, the duration threshold of remaining time, or a data amount of a data packet whose remaining time is less than or equal to the duration threshold.

7. The method according to claim 6, wherein the first protocol layer is a PDCP layer or an RLC layer, and the second protocol layer is a MAC layer.

8. The method according to claim 6 or 7, wherein the timer is a timer at a MAC layer of the first communication device or a timer at a PDCP layer of the first communication device.

9. The method according to any one of claims 1 to 8, wherein the remaining time of the first data packet is a maximum remaining transmission delay of the first data packet.

10. A communication apparatus, wherein the apparatus comprises:
a processing module, configured to determine remaining time of a first data packet based on remaining duration of a timer, wherein the remaining time of the first data packet is equal to the remaining duration of the timer; the timer is a timer of the first data packet, the timer is a timer of a data packet set comprising the first data packet, or the timer is a timer of a second data packet; and the second data packet is a 1^{st} data packet in the data packet set comprising the first data packet; and
a sending module, configured to send first information to a second communication device, wherein the first information indicates the remaining time, the first information indicates a remaining time interval comprising the remaining time, or the first information indicates whether there is a data packet whose remaining duration is less than a duration threshold.

11. The apparatus according to claim 10, wherein when the first information indicates the remaining time, the remaining time is less than the duration threshold, or the remaining time is minimum remaining time;
when the first information indicates the remaining time interval, the remaining time interval is a minimum remaining time interval, or all remaining time in the remaining time interval is less than the duration threshold; or
when the first information indicates that there is a data packet whose remaining time is less than or equal to the duration threshold in the first communication device, the remaining time of the first data packet is less than or equal to the duration threshold.

12. The apparatus according to claim 10 or 11, wherein the first information further indicates a data amount of at least one data packet, and remaining time of each of the at least one data packet is a maximum remaining transmission delay of each data packet; and
when the first information indicates the remaining time, the remaining time of each data packet is less than or equal to the remaining time of the first data packet; or
when the first information indicates the remaining time interval, the remaining time interval comprises the remaining time of each data packet.

13. The method according to claim 11, wherein when the first information indicates the remaining time, and the remaining time is the minimum remaining time, the first information further indicates a data amount of at least one data packet, and remaining time of each of the at least one data packet is less than or equal to the duration threshold.

14. The apparatus according to claim 12 or 13, wherein the at least one data packet comprises at least one of the following: a PDCP SDU that has not been constructed into a PDCP data PDU, a PDCP data PDU that has not been delivered to an RLC layer, a PDCP SDU that waits for retransmission, a PDCP data PDU that waits for retransmission, an RLC SDU and an RLC SDU segment that have not been assembled into an RLC data PDU, an RLC data PDU that waits for initial transmission, or an RLC data PDU that waits for retransmission.

15. The apparatus according to any one of claims 10 to 14, wherein the communication apparatus comprises a first protocol layer and a second protocol layer; and
the first protocol layer is configured to provide at least one of the following information for the second protocol layer: the remaining time of the first data packet, a data amount of a data packet whose remaining time is equal to the remaining time of the first data packet, the second information indicating the remaining time interval, a data amount of a data packet whose remaining time is within the remaining time interval, the duration threshold of remaining time, or a data amount of a data packet whose remaining time is less than or equal to the duration threshold.

16. The apparatus according to claim 15, wherein the first protocol layer is a PDCP layer or an RLC layer, and the second protocol layer is a MAC layer.

17. The apparatus according to claim 15 or 16, wherein the timer is a timer at a MAC layer of the communication apparatus or a timer at a PDCP layer of the communication apparatus.

18. The method according to any one of claims 10 to 17, wherein the remaining time of the first data packet is a maximum remaining transmission delay of the first data packet.

19. A communication apparatus, comprising a memory and a processor, wherein
the memory is configured to store program instructions; and
the processor is configured to execute the program instructions in the memory, to implement the method according to any one of claims 1 to 9.

20. A computer-readable storage medium, wherein the computer-readable storage medium stores program code to be executed by a computer, and the program code comprises instructions used to implement the method according to any one of claims 1 to 9.

21. A computer program product, wherein the computer program product comprises instructions used to implement the communication method according to any one of claims 1 to 9.
